# EUROPÄISCHE PATENTANMELDUNG

(11) **EP 2 071 953 A1**
(43) Veröffentlichungstag der Anmeldung: **24.06.2009**
(21) Anmeldenummer: 07150354.4
(22) Anmeldetag: 21.12.2007
(51) Int. Cl.: A01N 43/56, A01P 3/00

(54) **Verwendung von N-(3',4'-Dichlor-5-fluor-1,1'-biphenyl-2-yl)-3-(difluormethyl)-1-methyl-1H-pyrazol-4-carboxamid (Bixafen)**

(71) Anmelder: Bayer CropScience AG, 40789 Monheim (DE)
(72) Erfinder: Die Erfindernennung liegt noch nicht vor

(57) **Zusammenfassung**

Die vorliegende Erfindung betrifft die Verwendung von N-(3',4'-Dichlor-5-fluor-1,1'-biphenyl-2-yl)-3-(difluormethyl)-1-methyl-1H-pyrazol-4-carboxamid zur Bekämpfung von ausgewählten Mikroorganismen in Weizen, Gerste, Roggen, Triticale, Raps, Bananen, Erdnuss, Mais, Erbsen, Bohnen und Zuckerrüben-Pflanzen.

Außerdem betrifft die vorliegende Erfindung ein Verfahren zum Bekämpfen von Krankheiten der zuvor genannten Pflanzen durch deren Behandlung mit N-(3',4'-Dichlor-5-fluor-1,1'-biphenyl-2-yl)-3-(difluormethyl)-1-methyl-1H-pyrazol-4-carboxamid.

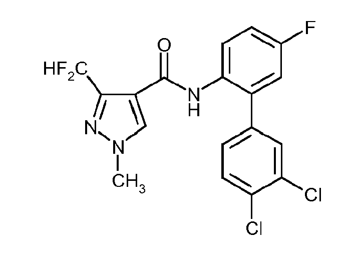

## Beschreibung

Die vorliegende Erfindung betrifft die Verwendung von N-(3',4'-Dichlor-5-fluor-1,1'-biphenyl-2-yl)-3-(difluonnethyl)-1-methyl-1H-pyrazol-4-carboxamid zur Bekämpfung von ausgewählten Mikroorganismen in Weizen, Gerste, Roggen, Triticale, Raps, Bananen, Erdnuss, Mais, Erbsen, Bohnen und Zuckerrüben-Pflanzen.

Außerdem betrifft die vorliegende Erfindung ein Verfahren zum Bekämpfen von Krankheiten der zuvor genannten Pflanzen durch deren Behandlung mit N-(3',4'-Dichlor-5-fluor-1,1'-biphenyl-2-yl)-3-(difluormethyl)-1-methyl-1H-pyrazol-4-carboxamid.

N-(3',4'-Dichlor-5-fluor-1,1'-biphenyl-2-yl)-3-(difluormethyl)-1-methyl-1H-pyrazol-4-carboxamid und dessen Wirksamkeit zur Bekämpfung von unerwünschten Mikroorganismen sind in WO-A-03/070705 vorbeschrieben.

WO-A-05/034628 lehrt die gute Eignung von Wirkstoffkombinationen, die aus N-(3',4'-Dichlor-5-fluor-1,1'-biphenyl-2-yl)-3-(difluormethyl)-1-methyl-1H-pyrazol-4-carboxamid einerseits und weiteren bekannten fungiziden Wirkstoffen andererseits bestehen zur Bekämpfung von unerwünschten phytopathogenen Pilzen.

WO-A-06/131221 lehrt die Verwendung von N-(3',4'-Dichlor-5-fluor-1,1'-biphenyl-2-yl)-3-(difluormethyl)-1-methyl-1H-pyrazol-4-carboxamid zur Bekämpfung von pathogenen Pilzen, insbesondere von Sojabohnenrost, *Phakopsora*-Arten, wie beispielsweise *Phakopsora sojae*, *Phakopsora pachyrhizi*, *Phakopsora vignae*, *Uredo sojae*, *Uromyces sojae*, aber auch gegen weitere Rostarten, wie beispielsweise den Kaffeerost, *Helileia vastarix*.

N-(3',4'-Dichlor-5-fluor-1,1'-biphenyl-2-yl)-3-(difluormethyl)-1-methyl-1H-pyrazol-4-carboxamid, in Folge als "Bixafen" bezeichnet, hat die folgende Struktur:

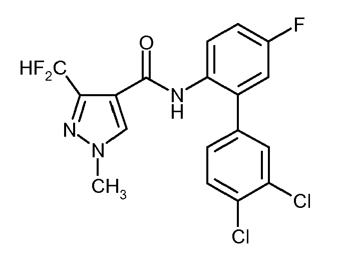

Es wurde nun gefunden, dass sich Bixafen zur Bekämpfung von bestimmten samen- und bodenbürtigen Pilzen, die Fäule, Auflaufreduktion und Keimlingsschäden hervorrufen, auf ausgewählten Pflanzen eignet.

Ein erster Gegenstand der Erfindung ist die Verwendung von Bixafen zur Bekämpfung von *Septoria tritici, Stagonospora nodorum, Oculimacula spp., Puccinia recondita, Puccinia striiformis, Drechslera tritici-repentis, Blumeria graminis, Microdochium spp., Fusarium spp., Tilletia spp,* und *Ustilago spp*. auf Weizen-Pflanzen.

Ein weiterer Gegenstand der Erfindung ist die Verwendung von Bixafen zur Bekämpfung von *Oculimacula spp., Puccinia striiformis, Puccinia hordei, Drechslera teres, Ramularia collo-cygni, Blumeria graminis, physiologischen Blattflecken, Microdochium spp., Fusarium spp., Pyrenophora spp., Rhynchosporium spp., insbesondere Rhynchosporium secalis* und *Ustilago spp*. auf Gerste-Pflanzen.

Ein weiterer Gegenstand der Erfindung ist die Verwendung von Bixafen zur Bekämpfung von *Septoria tritici, Stagonospora nodorum, Oculimacula spp., Puccinia recondita, Puccinia striiformis, Drechslera tritici-repentis, Blumeria graminis, Microdochium spp., Fusarium spp., Tilletia spp*., *Rhynchosporium spp*, *insbesondere Rhynchosporium secalis* und *Ustilago spp*. auf Triticale-Pflanzen.

Ein weiterer Gegenstand der Erfindung ist die Verwendung von Bixafen zur Bekämpfung von *Puccinia recondita*, *Rhynchosporium secalis und Blumeria graminis* auf Roggen-Pflanzen.

Ein weiterer Gegenstand der Erfindung ist ein Verfahren zum Bekämpfen von Krankheiten von Weizen, Gerste, Roggen, Triticale, Raps, Bananen, Erdnuss, Mais, Erbsen, Bohnen und Zuckerrüben-Pflanzen, dadurch gekennzeichnet, dass man die jeweiligen Pflanzen mit Bixafen behandelt.

Ein weiterer Gegenstand der Erfindung ist die Verwendung von Bixafen zur Bekämpfung von *Sclerotlinia sclerotiorum, Leptosphaeria maculans (Phoma lingam), Alternaria brassicae, Botrytis cinerea, Erysiphe polygoni* und *Pyrenopeziza brassicaee* auf Raps-Pflanzen.

Ein weiterer Gegenstand der Erfindung ist die Verwendung von Bixafen zur Bekämpfung von *Mycosphaerella spp*., insbesondere von *Mycosphaerella fijiensis* und *Mycosphaerella musicola* auf Bananen-Pflanzen.

Ein weiterer Gegenstand der Erfindung ist die Verwendung von Bixafen zur Bekämpfung von *Puccinia arachidis* und *Mycosphaerella spp*., insbesondere von *Mycosphaerella arachidis*, *Mycosphaerella berkeleyi* und *Sclerotium spp*., insbesondere *Sclerotium rolfsii, Sclerotinia sclerotiorum* auf Erdnuss-Pflanzen.

Ein weiterer Gegenstand der Erfindung ist die Verwendung von Bixafen zur Bekämpfung von *Cercospora spp*., insbesondere *Cercospora zeae-maydis, Fusarium spp*., *Puccinia spp., Helminthosporium spp., insbesondere Helminthosporium maydis, Helminthosporium turcicum und Puccinia spp*. auf Mais-Pflanzen.

Ein weiterer Gegenstand der Erfindung ist die Verwendung von Bixafen zur Bekämpfung von *Ascochyta spp*., *Erysiphe pisi, Uromyces pisi, Mycosphaerella spp., Botrytis cinerea* auf Erbsen.

Ein weiterer Gegenstand der Erfindung ist die Verwendung von Bixafen zur Bekämpfung von *Botrytis fabae*, *Uromyces viciae-fabae*, *Ascochyta fabae*, *Scleorotinia spp*., *Phaeisariopsis spp* auf Bohnen.

Ein weiterer Gegenstand der Erfindung ist die Verwendung von Bixafen zur Bekämpfung von *Rhizoctonia spp.; Cercospora spp., insbesondere Cercospora beticola; Erysiphe spp., insbesondere Erysiphe betae; Ramularia spp., insbesondere Ramularia beticola; Uromyces spp., insbesondere Uromyces betae;* auf Rüben-, vorzugsweise Zuckerrüben.

Ein weiterer Gegenstand der Erfindung ist die Verwendung von Bixafen zur Bekämpfung von *Ramularia areola, Colletotrichum gossypii var*. *cephalosporioides* in Baumwolle.

Ein weiterer Gegenstand der Erfindung ist die Verwendung von Bixafen zur Bekämpfung von *Puccinia spp*. in Zuckerrohr.

Unter unerwünschten Mikroorganismen sind im vorliegenden Fall die zuvor genannten Organismen/Pilze zu verstehen.

Die erfindungsgemäßen Stoffe können also eingesetzt werden, um Pflanzen innerhalb eines gewissen Zeitraumes nach der Behandlung gegen den Befall durch die genannten Schaderreger zu schützen. Der Zeitraum, innerhalb dessen Schutz herbeigeführt wird, erstreckt sich im allgemeinen von 1 bis 28 Tage, vorzugsweise 3 bis 14 Tage, besonders bevorzugt 5 bis 7 Tage nach der Behandlung der Pflanzen mit den Wirkstoffen. Je nach Applikationsform kann die Zugänglichkeit der Wirkstoffe zur Pflanze gezielt gesteuert werden. So kann beispielsweise ein Schutz gegen Spätsaisonkrankheiten, wie z. B. *Tilletia* spp. Oder *Ustilago* spp., durch Saatgutbehandlung erzielt werden.

Die gute Pflanzenverträglichkeit des Wirkstoffs in den zur Bekämpfung von Pflanzenkrankheiten notwendigen Konzentrationen erlaubt eine Behandlung von oberirdischen Pflanzenteilen, von Pflanz- und Saatgut, und des Bodens.

Bixafen eignet sich auch zur Steigerung des Ernteertrages, ist mindertoxisch und weist eine gute Pflanzenverträglichkeit auf.

Darüber hinaus kann durch die Behandlung mit Bixafen der Mykotoxingehalt im Erntegut und den daraus hergestellten Nahrungs- und Futtermitteln verringert werden. Besonders, aber nicht ausschließlich sind hierbei folgende Mykotoxine zu nennen: Deoxynivalenol (DON), Nivalenol, 15-Ac-DON, 3-Ac-DON, T2- und HT2- Toxin, Fumonisine, Zearalenon, Moniliformin, Fusarin, Diaceotoxyscirpenol (DAS), Beauvericin, Enniatin, Fusaroproliferin, Fusarenol, Ochratoxine, Patulin, Mutterkornalkaloide und Aflatoxine, die beispielsweise von den folgenden Pilzen verursacht werden können: Fusarium spec., wie Fusarium acuminatum, F. avenaceum, F. crookwellense, F. culmorum, F. graminearum (Gibberella zeae), F. equiseti, F. fujikoroi, F. musarum, F. oxysporum, F. proliferatum, F. poae, F. pseudograminearum, F. sambucinum, F. scirpi, F. semitectum, F. solani, F. sporotrichoides, F. langsethiae, F. subglutinans, F. tricinctum, F. verticillioides u.a. sowie auch von Aspergillus spec., Penicillium spec., Claviceps purpurea, Stachybotrys spec. u.a.

### Pflanzen

Im Zusammenhang mit der vorliegenden Erfindung wurde eine vorteilhafte Wirkung bei der Ausbringung auf Weizen, Gerste, Roggen und Triticale-Pflanzen beobachtet.

Erfindungsgemäß können alle Pflanzen und Pflanzenteile behandelt werden. Unter Pflanzen werden hierbei alle Pflanzen und Pflanzenpopulationen verstanden, wie erwünschte und unerwünschte Wildpflanzen oder Kulturpflanzen (einschließlich natürlich vorkommender Kulturpflanzen). Kulturpflanzen können Pflanzen sein, die durch konventionelle Züchtungs- und Optimierungsmethoden oder durch biotechnologische und gentechnologische Methoden oder Kombinationen dieser Methoden erhalten werden können, einschließlich der transgenen Pflanzen und einschließlich der durch Sortenschutzrechte schützbaren oder nicht schützbaren Pflanzensorten. Unter Pflanzenteilen sollen alle oberirdischen und unterirdischen Teile und Organe der Pflanzen, wie Spross, Blatt, Blüte und Wurzel verstanden werden, wobei beispielhaft Blätter, Nadeln, Stängel, Stämme, Blüten, Fruchtkörper, Früchte und Samen sowie Wurzeln, Knollen und Rhizome aufgeführt werden. Zu den Pflanzenteilen gehört auch Erntegut sowie vegetatives und generatives Vermehrungsmaterial, beispielsweise Stecklinge, Knollen, Rhizome, Ableger und Samen.

Wie bereits oben erwähnt, können erfindungsgemäß alle Pflanzen und deren Teile behandelt werden.

In einer bevorzugten Ausführungsform werden wild vorkommende oder durch konventionelle biologische Zuchtmethoden, wie Kreuzung oder Protoplastenfusion erhaltenen Pflanzenarten und Pflanzensorten sowie deren Teile behandelt. In einer weiteren bevorzugten Ausführungsform werden transgene Pflanzen und Pflanzensorten, die durch gentechnologische Methoden gegebenenfalls in Kombination mit konventionellen Methoden erhalten wurden (Genetically Modified Organisms) und deren Teile behandelt. Der Begriff "Teile" bzw. "Teile von Pflanzen" oder "Pflanzenteile" wurde oben erläutert.

Besonders bevorzugt werden erfindungsgemäß Pflanzen der jeweils handelsüblichen oder in Gebrauch befindlichen Pflanzensorten behandelt. Unter Pflanzensorten versteht man Pflanzen mit neuen Eigenschaften ("Traits"), die sowohl durch konventionelle Züchtung, durch Mutagenese oder durch rekombinante DNA-Techniken gezüchtet worden sind. Dies können Sorten, Rassen, Bio- und Genotypen sein.

Je nach Pflanzenarten bzw. Pflanzensorten, deren Standort und Wachstumsbedingungen (Böden, Klima, Vegetationsperiode, Ernährung) können durch die erfindungsgemäße Behandlung auch überadditive ("synergistische") Effekte auftreten. So sind beispielsweise erniedrigte Aufwandmengen und/oder Erweiterungen des Wirkungsspektrums und/oder eine Verstärkung der Wirkung der erfindungsgemäß verwendbaren Stoffe und Mittel, besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte möglich, die über die eigentlich zu erwartenden Effekte hinausgehen.

Zu den bevorzugten erfindungsgemäß zu behandelnden transgenen (gentechnologisch erhaltenen) Pflanzen bzw. Pflanzensorten gehören alle Pflanzen, die durch die gentechnologische Modifikation genetisches Material erhielten, welches diesen Pflanzen besondere vorteilhafte wertvolle Eigenschaften ("Traits") verleiht. Beispiele für solche Eigenschaften sind besseres Pflanzenwachstum, erhöhte Toleranz gegenüber hohen oder niedrigen Temperaturen, erhöhte Toleranz gegen Trockenheit oder gegen Wasser- bzw. Bodensalzgehalt, erhöhte Blühleistung, erleichterte Ernte, Beschleunigung der Reife, höhere Ernteerträge, höhere Qualität und/oder höherer Ernährungswert der Ernteprodukte, höhere Lagerfähigkeit und/oder Bearbeitbarkeit der Ernteprodukte. Weitere und besonders hervorgehobene Beispiele für solche Eigenschaften sind eine erhöhte Abwehr der Pflanzen gegen tierische und mikrobielle Schädlinge, wie gegenüber Insekten, Milben, pflanzenpathogenen Pilzen, Bakterien und/oder Viren sowie eine erhöhte Toleranz der Pflanzen gegen bestimmte herbizide Wirkstoffe. Als Beispiele transgener Pflanzen werden die wichtigen Kulturpflanzen, wie Getreide (Weizen, Reis), Mais, Soja, Kartoffel, Baumwolle erwähnt, wobei Mais, Soja, Kartoffel, Baumwolle, und Raps besonders hervorgehoben werden. Als Eigenschaften ("Traits") werden besonders hervorgehoben die erhöhte Abwehr der Pflanzen gegen Insekten, Spinnentiere, Nematoden und Schnecken durch in den Pflanzen entstehende Toxine, insbesondere solche, die durch das genetische Material aus Bacillus Thuringiensis (z.B. durch die Gene CryIA(a), CryIA(b), CryIA(c), CryIIA, CryIIIA, CryIIIB2, Cry9c Cry2Ab, Cry3Bb und CryIF sowie deren Kombinationen) in den Pflanzen erzeugt werden (im Folgenden "Bt Pflanzen"). Als Eigenschaften ("Traits") werden auch besonders hervorgehoben die erhöhte Abwehr von Pflanzen gegen Pilze, Bakterien und Viren durch Systemische Akquirierte Resistenz (SAR), Systemin, Phytoalexine, Elicitoren sowie Resistenzgene und entsprechend exprimierte Proteine und Toxine. Als Eigenschaften ("Traits") werden weiterhin besonders hervorgehoben die erhöhte Toleranz der Pflanzen gegenüber bestimmten herbiziden Wirkstoffen, z.B. Imidazolinonen, Sulfonylharnstoffen, Glyphosate oder Phosphinotricin (z.B. "PAT"-Gen). Die jeweils die gewünschten Eigenschaften ("Traits") verleihenden Gene können auch in Kombinationen miteinander in den transgenen Pflanzen vorkommen. Als Beispiele für "Bt Pflanzen" seien Maissorten, Baumwollsorten, Sojasorten und Kartoffelsorten genannt, die unter den Handelsbezeichnungen YIELD GARD® (z.B. Mais, Baumwolle, Soja), KnockOut® (z.B. Mais), StarLink® (z.B. Mais), Bollgard® (Baumwolle), Nucoton® (Baumwolle) und NewLeaf® (Kartoffel) vertrieben werden. Als Beispiele für Herbizid tolerante Pflanzen seien Maissorten, Baumwollsorten und Sojasorten genannt, die unter den Handelsbezeichnungen Roundup Ready® (Toleranz gegen Glyphosate z.B. Mais, Baumwolle, Soja), Liberty Link® (Toleranz gegen Phosphinotricin, z.B. Raps), IMI® (Toleranz gegen Imidazolinone) und STS® (Toleranz gegen Sulfonylharnstoffe z.B. Mais) vertrieben werden. Als Herbizid resistente (konventionell auf Herbizid-Toleranz gezüchtete) Pflanzen seien auch die unter der Bezeichnung Clearfield® vertriebenen Sorten (z.B. Mais) erwähnt. Selbstverständlich gelten diese Aussagen auch für in der Zukunft entwickelte bzw. zukünftig auf den Markt kommende Pflanzensorten mit diesen oder zukünftig entwickelten genetischen Eigenschaften ("Traits").

Die aufgeführten Pflanzen können besonders vorteilhaft erfindungsgemäß mit Bixafen bzw. den erfindungsgemäßen Wirkstoffmischungen behandelt werden. Die bei den Wirkstoffen bzw. Mischungen oben angegebenen Vorzugsbereiche gelten auch für die Behandlung dieser Pflanzen. Besonders hervorgehoben sei die Pflanzenbehandlung mit den im vorliegenden Text speziell aufgeführten Verbindungen bzw. Mischungen.

### Applikationsformen

Die erfindungsgemäße Behandlung der Pflanzen und Pflanzenteile mit den Wirkstoffen erfolgt direkt oder durch Einwirkung auf deren Umgebung, Lebensraum oder Lagerraum nach den üblichen Behandlungsmethoden, z.B. durch Tauchen, Sprühen, Verdampfen, Vernebeln, Streuen, Aufstreichen und bei Vermehrungsmaterial, insbesondere bei Samen, weiterhin durch ein- oder mehrschichtiges Umhüllen.

In einer besonders bevorzugten Ausführungsform der vorliegenden Erfindung wird Bixafen, dessen erfindungsgemäße Mischungen mit weiteren Wirkstoffen oder dessen Formulierungen zur Applikation auf Blätter und Stängel verwendet.

Der Wirkstoff kann in Abhängigkeit von ihren jeweiligen physikalischen und/ oder chemischen Eigenschaften in die üblichen Formulierungen überführt werden, wie Lösungen, Emulsionen, Suspensionen, Pulver, Schäume, Pasten, Granulate, Aerosole, Feinstverkapselungen in polymeren Stoffen und in Hüllmassen für Saatgut, sowie ULV-Kalt- und Warmnebel-Formulierungen.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln. Im Falle der Benutzung von Wasser als Streckmittel können z.B. auch organische Lösungsmittel als Hilfslösungsmittel verwendet werden. Als flüssige Lösungsmittel kommen im Wesentlichen infrage: Aromaten, wie Xylol, Toluol oder Alkylnaphthaline, chlorierte Aromaten oder chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, Alkohole, wie Butanol oder Glycol sowie deren Ether und Ester, Ketone, wie Aceton, Methylethylketon, Methylisobutylketon oder Cyclohexanon, stark polare Lösungsmittel, wie Dimethylformamid und Dimethylsulfoxid, sowie Wasser. Mit verflüssigten gasförmigen Streckmitteln oder Trägerstoffen sind solche Flüssigkeiten gemeint, welche bei normaler Temperatur und unter Normaldruck gasförmig sind, z.B. Aerosol-Treibgase, wie Halogenkohlenwasserstoffe sowie Butan, Propan, Stickstoff und Kohlendioxid. Als feste Trägerstoffe kommen infrage: z.B. natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate. Als feste Trägerstoffe für Granulate kommen infrage: z.B. gebrochene und fraktionierte natürliche Gesteine wie Calcit, Bims, Marmor, Sepiolith, Dolomit sowie synthetische Granulate aus anorganischen und organischen Mehlen sowie Granulate aus organischem Material wie Sägemehl, Kokosnussschalen, Maiskolben und Tabakstängel. Als Emulgier und/oder schaumerzeugende Mittel kommen infrage: z.B. nichtionogene und anionische Emulgatoren, wie Polyoxyethylen-Fettsäureester, Polyoxyethylen-Fettalkoholether, z.B. Alkylarylpolyglycolether, Alkylsulfonate, Alkylsulfate, Arylsulfonate sowie Eiweißhydrolysate. Als Dispergiermittel kommen infrage: z.B. Lignin-Sulfitablaugen und Methylcellulose.

Es können in den Formulierungen Haftmittel wie Carboxymethylcellulose, natürliche und synthetische pulverige, körnige oder latexförmige Polymere verwendet werden, wie Gummiarabicum, Polyvinylalkohol, Polyvinylacetat, sowie natürliche Phospholipide, wie Kephaline und Lecithine, und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe, wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 %.

Die Bekämpfung von phytopathogenen Pilzen durch die Behandlung des Saatguts von Pflanzen ist seit langem bekannt und ist Gegenstand ständiger Verbesserungen. Dennoch ergeben sich bei der Behandlung von Saatgut eine Reihe von Problemen, die nicht immer zufrieden stellend gelöst werden können. So ist es erstrebenswert, Verfahren zum Schutz des Saatguts und der keimenden Pflanze zu entwickeln, die das zusätzliche Ausbringen von Pflanzenschutzmitteln nach der Saat oder nach dem Auflaufen der Pflanzen überflüssig machen oder zumindest deutlich verringern. Es ist weiterhin erstrebenswert, die Menge des eingesetzten Wirkstoffs dahingehend zu optimieren, dass das Saatgut und die keimende Pflanze vor dem Befall durch phytopathogene Pilze bestmöglich geschützt wird, ohne jedoch die Pflanze selbst durch den eingesetzten Wirkstoff zu schädigen. Insbesondere sollten Verfahren zur Behandlung von Saatgut auch die intrinsischen fungiziden Eigenschaften transgener Pflanzen einbeziehen, um einen optimalen Schutz des Saatguts und der keimenden Pflanze bei einem minimalen Aufwand an Pflanzenschutzmitteln zu erreichen.

Die vorliegende Erfindung bezieht sich daher insbesondere auch auf ein Verfahren zum Schutz von Saatgut und keimenden Pflanzen vor dem Befall von phytopathogenen Pilzen, indem das Saatgut mit einem erfindungsgemäßen Mittel behandelt wird.

Die Erfindung bezieht sich ebenfalls auf die Verwendung der erfindungsgemäßen Mittel zur Behandlung von Saatgut zum Schutz des Saatguts und der keimenden Pflanze vor phytopathogenen Pilzen.

Weiterhin bezieht sich die Erfindung auf Saatgut, welches zum Schutz vor phytopathogenen Pilzen mit einem erfindungsgemäßen Mittel behandelt wurde.

Einer der Vorteile der vorliegenden Erfindung ist es, dass aufgrund der besonderen systemischen Eigenschaften der erfindungsgemäßen Mittel die Behandlung des Saatguts mit diesen Mitteln nicht nur das Saatgut selbst, sondern auch die daraus hervorgehenden Pflanzen nach dem Auflaufen vor phytopathogenen Pilzen schützt. Auf diese Weise kann die unmittelbare Behandlung der Kultur zum Zeitpunkt der Aussaat oder kurz danach entfallen.

Ebenso ist es als vorteilhaft anzusehen, dass die erfindungsgemäßen Mischungen insbesondere auch bei transgenem Saatgut eingesetzt werden können.

Die erfindungsgemäßen Mittel eignen sich zum Schutz von Saatgut jeglicher Pflanzensorte, die in der Landwirtschaft, im Gewächshaus, in Forsten oder im Gartenbau eingesetzt wird. Insbesondere handelt es sich dabei um Saatgut von Getreide (wie Weizen, Gerste, Roggen, Hirse und Hafer), Mais, Baumwolle, Soja, Reis, Kartoffeln, Sonnenblume, Bohne, Kaffee, Rübe (z.B. Zuckerrübe und Futterrübe), Erdnuss, Erbsen, Bohnen, Gemüse (wie Tomate, Gurke, Zwiebeln und Salat), Rasen und Zierpflanzen. Besondere Bedeutung kommt der Behandlung des Saatguts von Getreide (wie Weizen, Gerste, Roggen und Hafer), Mais und Reis zu.

Im Rahmen der vorliegenden Erfindung wird das erfindungsgemäßes Mittel alleine oder in einer geeigneten Formulierung auf das Saatgut aufgebracht. Vorzugsweise wird das Saatgut in einem Zustand behandelt, in dem so stabil ist, dass keine Schäden bei der Behandlung auftreten. Im Allgemeinen kann die Behandlung des Saatguts zu jedem Zeitpunkt zwischen der Ernte und der Aussaat erfolgen. Üblicherweise wird Saatgut verwendet, das von der Pflanze getrennt und von Kolben, Schalen, Stängeln, Hülle, Wolle oder Fruchtfleisch befreit wurde. So kann zum Beispiel Saatgut verwendet werden, das geerntet, gereinigt und bis zu einem Feuchtigkeitsgehalt von unter 15 Gew.-% getrocknet wurde. Alternativ kann auch Saatgut verwendet werden, das nach dem Trocknen z.B. mit Wasser behandelt und dann erneut getrocknet wurde.

Im Allgemeinen muss bei der Behandlung des Saatguts darauf geachtet werden, dass die Menge des auf das Saatgut aufgebrachten erfindungsgemäßen Mittels und/oder weiterer Zusatzstoffe so gewählt wird, dass die Keimung des Saatguts nicht beeinträchtigt bzw. die daraus hervorgehende Pflanze nicht geschädigt wird. Dies ist vor allem bei Wirkstoffen zu beachten, die in bestimmten Aufwandmengen phytotoxische Effekte zeigen können.

Die erfindungsgemäßen Mittel können unmittelbar aufgebracht werden, also ohne weitere Komponenten zu enthalten und ohne verdünnt worden zu sein. In der Regel ist es vorzuziehen, die Mittel in Form einer geeigneten Formulierung auf das Saatgut aufzubringen. Geeignete Formulierungen und Verfahren für die Saatgutbehandlung sind dem Fachmann bekannt und werden z.B. in den folgenden Dokumenten beschrieben: US 4,272,417 A, US 4,245,432 A, US 4,808,430 A, US 5,876,739 A, US 2003/0176428 A1, WO 2002/080675 A1, WO 2002/028186 A2.

Die erfindungsgemäß verwendbaren Wirkstoffkombinationen können in die üblichen Beizmittel-Formulierungen überführt werden, wie Lösungen, Emulsionen, Suspensionen, Pulver, Schäume, Slurries oder andere Hüllmassen für Saatgut, sowie ULV-Formulierungen.

Diese Formulierungen werden in bekannter Weise hergestellt, indem man die Wirkstoffe oder Wirkstoffkombinationen mit üblichen Zusatzstoffen vermischt, wie zum Beispiel übliche Streckmittel sowie Lösungs- oder Verdünnungsmittel, Farbstoffe, Netzmittel, Dispergiermittel, Emulgatoren, Entschäumer, Konservierungsmittel, sekundäre Verdickungsmittel, Kleber, Gibberelline und auch Wasser.

Als Farbstoffe, die in den erfindungsgemäß verwendbaren Beizmittel-Formulierungen enthalten sein können, kommen alle für derartige Zwecke üblichen Farbstoffe in Betracht. Dabei sind sowohl in Wasser wenig lösliche Pigmente als auch in Wasser lösliche Farbstoffe verwendbar. Als Beispiele genannt seien die unter den Bezeichnungen Rhodamin B, C.I. Pigment Red 112 und C.I. Solvent Red 1 bekannten Farbstoffe.

Als Netzmittel, die in den erfindungsgemäß verwendbaren Beizmittel-Formulierungen enthalten sein können, kommen alle zur Formulierung von agrochemischen Wirkstoffen üblichen, die Benetzung fördernden Stoffe in Frage. Vorzugsweise verwendbar sind Alkylnaphthalin-Sulfonate, wie Diisopropyl- oder Diisobutyl-naphthalin-Sulfonate.

Als Dispergiermittel und/oder Emulgatoren, die in den erfindungsgemäß verwendbaren Beizmittel-Formulierungen enthalten sein können, kommen alle zur Formulierung von agrochemischen Wirkstoffen üblichen nichtionischen, anionischen und kationischen Dispergiermittel in Betracht. Vorzugsweise verwendbar sind nichtionische oder anionische Dispergiermittel oder Gemische von nichtionischen oder anionischen Dispergiermitteln. Als geeignete nichtionische Dispergiermittel sind insbesondere Ethylenoxid-Propylenoxid Blockpolymere, Alkylphenolpolyglykolether sowie Tristryrylphenolpolyglykolether und deren phosphatierte oder sulfatierte Derivate zu nennen. Geeignete anionische Dispergiermittel sind insbesondere Ligninsulfonate, Polyacrylsäuresalze und Arylsulfonat-Formaldehydkondensate.

Als Entschäumer können in den erfindungsgemäß verwendbaren Beizmittel-Formulierungen alle zur Formulierung von agrochemischen Wirkstoffen üblichen schaumhemmenden Stoffe enthalten sein. Vorzugsweise verwendbar sind Silikonentschäumer und Magnesiumstearat.

Als Konservierungsmittel können in den erfindungsgemäß verwendbaren Beizmittel-Formulierungen alle für derartige Zwecke in agrochemischen Mitteln einsetzbaren Stoffe vorhanden sein. Beispielhaft genannt seien Dichlorophen und Benzylalkoholhemiformal.

Als sekundäre Verdickungsmittel, die in den erfindungsgemäß verwendbaren Beizmittel-Formulierungen enthalten sein können, kommen alle für derartige Zwecke in agrochemischen Mitteln einsetzbaren Stoffe in Frage. Vorzugsweise in Betracht kommen Cellulosederivate, Acrylsäurederivate, Xanthan, modifizierte Tone und hochdisperse Kieselsäure.

Als Kleber, die in den erfindungsgemäß verwendbaren Beizmittel-Formulierungen enthalten sein können, kommen alle üblichen in Beizmitteln einsetzbaren Bindemittel in Frage. Vorzugsweise genannt seien Polyvinylpyrrolidon, Polyvinylacetat, Polyvinylalkohol und Tylose.

Als Gibberelline, die in den erfindungsgemäß verwendbaren Beizmittel-Formulierungen enthalten sein können, kommen vorzugsweise die Gibberelline A1, A3 (= Gibberellinsäure), A4 und A7 infrage, be-sonders bevorzugt verwendet man die Gibberellinsäure. Die Gibberelline sind bekannt (vgl. R. Wegler "Chemie der Pflanzenschutz- und Schädlingsbekämpfungsmittel", Bd. 2, Springer Verlag, 1970, S. 401-412).

Die erfindungsgemäß verwendbaren Beizmittel-Formulierungen können entweder direkt oder nach vorherigem Verdünnen mit Wasser zur Behandlung von Saatgut der verschiedensten Art eingesetzt werden. So lassen sich die Konzentrate oder die daraus durch Verdünnen mit Wasser erhältlichen Zubereitungen einsetzen zur Beizung des Saatgutes von Getreide, wie Weizen, Gerste, Roggen, Hafer und Triticale, sowie des Saatgutes von Mais, Reis, Raps, Erbsen, Bohnen, Baumwolle, Sonnenblumen und Rüben oder auch von Gemüsesaatgut der verschiedensten Natur. Die erfindungsgemäß verwendbaren Beizmittel-Formulierungen oder deren verdünnte Zubereitungen können auch zum Beizen von Saatgut transgener Pflanzen eingesetzt werden. Dabei können im Zusammenwirken mit den durch Expression gebildeten Substanzen auch zusätzliche synergistische Effekte auftreten.

Zur Behandlung von Saatgut mit den erfindungsgemäß verwendbaren Beizmittel-Formulierungen oder den daraus durch Zugabe von Wasser hergestellten Zubereitungen kommen alle üblicherweise für die Beizung einsetzbaren Mischgeräte in Betracht. Im einzelnen geht man bei der Beizung so vor, dass man das Saatgut in einen Mischer gibt, die jeweils gewünschte Menge an Beizmittel-Formulierungen entweder als solche oder nach vorherigem Verdünnen mit Wasser hinzufügt und bis zur gleichmäßigen Verteilung der Formulierung auf dem Saatgut mischt. Gegebenenfalls schließt sich ein Trocknungsvorgang an.

Die Aufwandmenge an den erfindungsgemäß verwendbaren Beizmittel-Formulierungen kann innerhalb eines größeren Bereiches variiert werden. Sie richtet sich nach dem jeweiligen Gehalt der Wirkstoffe in den Formulierungen und nach dem Saatgut. Die Aufwandmengen an Wirkstoffkombination liegen im Allgemeinen zwischen 0,001 und 50 g pro Kilogramm Saatgut, vorzugsweise zwischen 0,01 und 15 g pro Kilogramm Saatgut.

### Mischungen

Bixafen kann als solches oder in Formulierungen auch in Mischung mit bekannten Fungiziden, Bakteriziden, Akariziden, Nematiziden, Herbiziden, Insektiziden, Safenern, Produkten zur Bodenverbesserung oder zur Reduktion von Pflanzenstress, z.B. Myconate, verwendet werden, um so z.B. das Wirkungsspektrum zu verbreitern oder Resistenzentwicklungen vorzubeugen. In vielen Fällen erhält man dabei synergistische Effekte, d.h. die Wirksamkeit der Mischung ist größer als die Wirksamkeit der Einzelkomponenten.

Erfindungsgemäß bedeutet der Ausdruck "Mischung" verschiedene mögliche Kombinationen von wenigstens zwei der oben genannten Wirkstoffe, wie beispielsweise Fertigmischungen, Tankmischungen (worunter Spritzmischungen verstanden werden, die vor der Anwendung aus den Formulierungen der Einzelwirkstoffe durch Zusammengeben und Verdünnen hergestellt werden) oder Kombinationen hiervon (z.B. wird eine binäre Fertigmischung aus zwei der oben genannten Wirkstoffen mit einer Formulierung der dritten Einzelsubstanz in eine Tankmischung überführt). Erfindungsgemäß können die Einzelwirkstoffe auch sequentiell eingesetzt werden, d.h. einer nach dem anderen, und zwar mit einem vernünftigen zeitlichen Abstand von wenigen Stunden oder Tagen, bei Saatgutbehandlung z.B. auch durch Aufbringen mehrerer Schichten, die unterschiedliche Wirkstoffe enthalten. Vorzugsweise spielt es keine Rolle, in welcher Reihenfolge die einzelnen Wirkstoffe eingesetzt werden können.

Im Zusammenhang mit der vorliegenden Erfindung sind die folgenden Wirkstoffkombinationen und deren Verwendungen bevorzugt:

Verwendung von Mischungen (1) umfassend Bixafen (A) und Prothioconazole (B-2) zur Bekämpfung von *Septoria tritici*, *Stagonospora nodorum*, *Oculimacula spp*., *Puccinia recondita*, *Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp*., *Rhynchosporium spp*., *insbesondere Rhynchosporium secalis* und *Ustilago spp*. in Getreide, vorzugsweise in Weizen, Gerste, Roggen und Triticale.

Die Mischung (1) der Komponenten (A):(B-2) kann 0,1 bis 5 Gewichtsteile (A), 1 bis 10 Gewichtsteile (B-2) enthalten. Vorzugsweise enthält die Mischung der Komponenten (A):(B-2) 0,5 bis 3 Gewichtsteile (A) und 2 bis 8 Gewichtsteile (B-2). Besonders bevorzugt enthält die Mischung der Komponenten (A):(B-2) 1 bis 2 Gewichtsteile (A) und 3 bis 4 Gewichtsteile (B-2).

Die zuvor beschriebene erfindungsgemäße Mischung (1) kann sowohl zur Behandlung von Blättern und Stängeln, als auch zur Saatgutbehandlung der Getreidepflanzen eingesetzt werden. Vorzugsweise wird die zuvor beschriebene Mischung (1) zur Behandlung von Blättern und Stängeln eingesetzt. Die dazu üblicherweise eingesetzten Aufwandmengen betragen 5 g bis 1000 g, vorzugsweise 50 g bis 500 g, besonders bevorzugt zwischen 100 g bis 300 g der Mischung (1) bezogen auf 1 ha der zu behandelnden Pflanzen.

Verwendung von Mischungen (2) umfassend Bixafen (A) und Tebuconazole (B-4) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. *in Getreide*, Raps, Bananen, Erdnuss, Mais, Erbsen, Bohnen und Zuckerrüben-Pflanzen, vorzugsweise in Weizen, Gerste, Roggen und Triticale.

Die Mischung der Komponenten (A):(B-4) kann 0,5 bis 5 Gewichtsteile (A) und 1 bis 15 Gewichtsteile (B-4) enthalten. Vorzugsweise enthält die Mischung der Komponenten (A):(B-4) 1 bis 4 Gewichtsteile (A) und 2 bis 10 Gewichtsteile (B-4). Besonders bevorzugt enthält die Mischung der Komponenten (A):(B-4) 2 bis 3 Gewichtsteile (A) und 3 bis 5 Gewichtsteile (B-4).

Die zuvor beschriebene erfindungsgemäße Mischung (2) kann sowohl zur Behandlung von Blättern und Stängeln, als auch zur Saatgutbehandlung der Getreidepflanzen eingesetzt werden. Vorzugsweise wird die zuvor beschriebene Mischung (2) zur Behandlung von Blättern und Stängeln eingesetzt. Die dazu üblicherweise eingesetzten Aufwandmengen betragen 3 g bis 1000 g, vorzugsweise 50 g bis 500 g, besonders bevorzugt zwischen 100 g bis 350 g der Mischung (2) bezogen auf 1 ha der zu behandelnden Pflanzen.

Verwendung von Mischungen (3) umfassend Bixafen (A), Prothioconazole (B-2) und Tebuconazole (B-4) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. *in Getreide*, Raps, Bananen, Erdnuss, Mais, Erbsen, Bohnen und Zuckerrüben-Pflanzen, vorzugsweise in Weizen, Gerste, Roggen und Triticale.

Die Mischung (3) der Komponenten (A):(B-2):(B-4) kann 0,5 bis 5 Gewichtsteile (A), 0,5 bis 5 Gewichtsteile (B-2) und 0,5 bis 5 Gewichtsteile (B-4) betragen. Vorzugsweise enthält die Mischung der Komponenten (A):(B-2):(B-4) 1 bis 4 Gewichtsteile (A), 1 bis 4 Gewichtsteile (B-2) und 1 bis 4 Gewichtsteile (B-4). Besonders bevorzugt enthält die Mischung der Komponenten A:(B-2):(B-4) 2 bis 3 Gewichtsteile (A), 2 bis 3 Gewichtsteile (B-2) und 2 bis 3 Gewichtsteile (B-4).

Die zuvor beschriebene erfindungsgemäße Mischung (3) kann sowohl zur Behandlung von Blättern und Stängeln, als auch zur Saatgutbehandlung der Gerstenpflanzen eingesetzt werden. Vorzugsweise wird die zuvor beschriebene Mischung (3) zur Behandlung von Blättern und Stängeln eingesetzt. Die dazu üblicherweise eingesetzten Aufwandmengen betragen 3 g bis 1000 g, vorzugsweise 50 g bis 500 g, besonders bevorzugt zwischen 100 g bis 300 g der Mischung (3) bezogen auf 1 ha der zu behandelnden Pflanzen.

Verwendung von Mischungen (4) umfassend Bixafen (A), Prothioconazole (B-2) und Spiroxamin (C-1) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. in Getreide, Raps, Bananen, Erdnuss, Mais, Erbsen, Bohnen und Zuckerrüben-Pflanzen, vorzugsweise in Weizen, Gerste, Roggen und Triticale.

Die Mischung der Komponenten (A):(B-2):(C-1) kann 0,5 bis 5 Gewichtsteile (A), 0,5 bis 5 Gewichtsteile (B-2) und 1 bis 15 Gewichtsteile (C-1) enthalten. Vorzugsweise enthält die Mischung der Komponenten (A):(B-2):(C-1) 1 bis 4 Gewichtsteile (A), zwischen 1 bis 4 Gewichtsteile (B-2) und 2 bis 10 Gewichtsteile (C-1). Besonders bevorzugt enthält die Mischung der Komponenten A:(B-2):(C-1) 2 bis 3 Gewichtsteile (A), 2 bis 3 Gewichtsteile (B-2) und 5 bis 8 Gewichtsteile (C-1).

Die zuvor beschriebene erfindungsgemäße Mischung (4) kann sowohl zur Behandlung von Blättern und Stängeln, als auch zur Saatgutbehandlung der Gerstenpflanzen eingesetzt werden. Vorzugsweise wird die zuvor beschriebene Mischung (4) zur Behandlung von Blättern und Stängeln eingesetzt. Die dazu üblicherweise eingesetzten Aufwandmengen betragen 5 g bis 1500 g, vorzugsweise 100 g bis 1000 g, besonders bevorzugt zwischen 300 g bis 600 g der Mischung (4) bezogen auf 1 ha der zu behandelnden Pflanzen.

Verwendung von Mischungen (5) umfassend Bixafen (A) und Fluoxastrobin (B-5) zur Bekämpfung von *Septoria tritici, Stagonospora nodorum, Oculimacula spp*.*, Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp*.*, insbesondere Rhynchosporium secalis* und *Ustilago spp*. *in Getreide*, Raps, Bananen, Erdnuss, Mais, Erbsen, Bohnen und Zuckerrüben-Pflanzen, vorzugsweise in Weizen, Gerste, Roggen und Triticale.

Die Mischung der Komponenten (A):(B-5) kann 0,5 bis 5 Gewichtsteile (A) und 1 bis 15 Gewichtsteile (B-5) enthalten. Vorzugsweise enthält die Mischung der Komponenten (A):(B-5) 1 bis 4 Gewichtsteile (A) und 2 bis 10 Gewichtsteile (B-5). Besonders bevorzugt enthält die Mischung der Komponenten (A):(B-5) 2 bis 3 Gewichtsteile (A) und 3 bis 5 Gewichtsteile (B-5).

Die zuvor beschriebene erfindungsgemäße Mischung (5) kann sowohl zur Behandlung von Blättern und Stängeln, als auch zur Saatgutbehandlung der Getreidepflanzen eingesetzt werden. Vorzugsweise wird die zuvor beschriebene Mischung (5) zur Behandlung von Blättern und Stängeln eingesetzt. Die dazu üblicherweise eingesetzten Aufwandmengen betragen 10 g bis 1000 g, vorzugsweise 50 g bis 500 g, besonders bevorzugt zwischen 100 g bis 300 g der Mischung (5) bezogen auf 1 ha der zu behandelnden Pflanzen.

Verwendung von Mischungen (6) umfassend Bixafen (A) und Trifloxystrobin (B-6) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp*.*, insbesondere Rhynchosporium secalis* und *Ustilago spp*. *in Getreide*, Raps, Bananen, Erdnuss, Mais, Erbsen, Bohnen und Zuckerrüben-Pflanzen, vorzugsweise in Weizen, Gerste, Roggen und Triticale.

Die Mischung der Komponenten (A):(B-6) kann 0,5 bis 5 Gewichtsteile (A) und 1 bis 15 Gewichtsteile (B-6) enthalten. Vorzugsweise enthält die Mischung der Komponenten (A):(B-6) 1 bis 4 Gewichtsteile (A) und 2 bis 10 Gewichtsteile (B-6). Besonders bevorzugt enthält die Mischung der Komponenten (A):(B-6) 2 bis 3 Gewichtsteile (A) und 3 bis 5 Gewichtsteile (B-6).

Die zuvor beschriebene erfindungsgemäße Mischung (6) kann sowohl zur Behandlung von Blättern und Stängeln, als auch zur Saatgutbehandlung der Getreidepflanzen eingesetzt werden. Vorzugsweise wird die zuvor beschriebene Mischung (6) zur Behandlung von Blättern und Stängeln eingesetzt. Die dazu üblicherweise eingesetzten Aufwandmengen betragen 10 g bis 1000 g, vorzugsweise 50 g bis 500 g, besonders bevorzugt zwischen 100 g bis 300 g der Mischung (6) bezogen auf 1 ha der zu behandelnden Pflanzen.

Verwendung von Mischungen (7) umfassend Bixafen (A), Tebuconazole (B-4) und Spiroxamin (C-1) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. in Getreide, Raps, Bananen, Erdnuss, Mais, Erbsen, Bohnen und Zuckerrüben-Pflanzen, vorzugsweise in Weizen, Gerste, Roggen und Triticale.

Die Mischung (7) der Komponenten (A):(B-4):(C-1) kann 1 bis 10 Gewichtsteile (A), 1 bis 10 Gewichtsteile (B-4) und 1 bis 10 Gewichtsteile (C-1) enthalten. Vorzugsweise enthält die Mischung der Komponenten (A):(B-4):(C-1) 2 bis 8 Gewichtsteile (A), zwischen 2 bis 8 Gewichtsteile (B-4) und 2 bis 8 Gewichtsteile (C-1). Besonders bevorzugt enthält die Mischung der Komponenten (A):(B-4):(C-1) 3 bis 5 Gewichtsteile (A), 3 bis 5 Gewichtsteile (B-4) und 3 bis 5 Gewichtsteile (C-1).

Die zuvor beschriebene erfindungsgemäße Mischung (7) kann sowohl zur Behandlung von Blättern und Stängeln, als auch zur Saatgutbehandlung der Gerstenpflanzen eingesetzt werden. Vorzugsweise wird die zuvor beschriebene Mischung (7) zur Behandlung von Blättern und Stängeln eingesetzt. Die dazu üblicherweise eingesetzten Aufwandmengen betragen 5 g bis 1500 g, vorzugsweise 100 g bis 1000 g, besonders bevorzugt zwischen 300 g bis 600 g der Mischung (7) bezogen auf 1 ha der zu behandelnden Pflanzen.

Verwendung von Mischungen (8) umfassend Bixafen (A), Prothioconazole (B-2) und Fluoxastrobin (B-5) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. in Getreide, Raps, Bananen, Erdnuss, Mais, Erbsen, Bohnen und Zuckerrüben-Pflanzen, vorzugsweise in Weizen, Gerste, Roggen und Triticale.

Die Mischung (8) der Komponenten (A):(B-2):(B-5) kann 1 bis 10 Gewichtsteile (A), 1 bis 10 Gewichtsteile (B-2) und 1 bis 10 Gewichtsteile (B-5) enthalten. Vorzugsweise enthält die Mischung der Komponenten (A):(B-2):(B-5) 2 bis 8 Gewichtsteile (A), zwischen 2 bis 8 Gewichtsteile (B-2) und 2 bis 8 Gewichtsteile (B-5). Besonders bevorzugt enthält die Mischung der Komponenten (A):(B-2):(B-5) 3 bis 5 Gewichtsteile (A), 3 bis 5 Gewichtsteile (B-2) und 3 bis 5 Gewichtsteile (B-5).

Die zuvor beschriebene erfindungsgemäße Mischung (8) kann sowohl zur Behandlung von Blättern und Stängeln, als auch zur Saatgutbehandlung der Gerstenpflanzen eingesetzt werden. Vorzugsweise wird die zuvor beschriebene Mischung (8) zur Behandlung von Blättern und Stängeln eingesetzt. Die dazu üblicherweise eingesetzten Aufwandmengen betragen 5 g bis 1000 g, vorzugsweise 50 g bis 500 g, besonders bevorzugt zwischen 100 g bis 300 g der Mischung (8) bezogen auf 1 ha der zu behandelnden Pflanzen.

Verwendung von Mischungen (9) umfassend Bixafen (A), Tebuconazole (B-4) und Fluoxastrobin (B-5) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. in Getreide, Raps, Bananen, Erdnuss, Mais, Erbsen, Bohnen und Zuckerrüben-Pflanzen, vorzugsweise in Weizen, Gerste, Roggen und Triticale.

Die Mischung (9) der Komponenten (A):(B-4):(B-5) kann 1 bis 10 Gewichtsteile (A), 1 bis 10 Gewichtsteile (B-4) und 1 bis 10 Gewichtsteile (B-5) enthalten. Vorzugsweise enthält die Mischung der Komponenten (A):(B-4):(B-5) 2 bis 8 Gewichtsteile (A), zwischen 2 bis 8 Gewichtsteile (B-4) und 2 bis 8 Gewichtsteile (B-5). Besonders bevorzugt enthält die Mischung der Komponenten (A):(B-4):(B-5) 3 bis 5 Gewichtsteile (A), 3 bis 5 Gewichtsteile (B-4) und 3 bis 5 Gewichtsteile (B-5).

Die zuvor beschriebene erfindungsgemäße Mischung (9) kann sowohl zur Behandlung von Blättern und Stängeln, als auch zur Saatgutbehandlung der Gerstenpflanzen eingesetzt werden. Vorzugsweise wird die zuvor beschriebene Mischung (9) zur Behandlung von Blättern und Stängeln eingesetzt. Die dazu üblicherweise eingesetzten Aufwandmengen betragen 3 g bis 1000 g, vorzugsweise 50 g bis 500 g, besonders bevorzugt zwischen 100 g bis 350 g der Mischung (9) bezogen auf 1 ha der zu behandelnden Pflanzen.

Verwendung von Mischungen (10) umfassend Bixafen (A), Tebuconazole (B-4) und Trifloxystrobin (B-6) zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Pyrenophora spp., Rhynchosporium spp., insbesondere Rhynchosporium secalis* und *Ustilago spp*. in Getreide, Raps, Bananen, Erdnuss, Mais, Erbsen, Bohnen und Zuckerrüben-Pflanzen, vorzugsweise in Weizen, Gerste, Roggen und Triticale.

Die Mischung (10) der Komponenten (A):(B-4):(B-6) kann 1 bis 10 Gewichtsteile (A), 1 bis 10 Gewichtsteile (B-4) und 1 bis 10 Gewichtsteile (B-6) enthalten. Vorzugsweise enthält die Mischung der Komponenten (A):(B-4):(B-6) 2 bis 8 Gewichtsteile (A), zwischen 2 bis 8 Gewichtsteile (B-4) und 2 bis 8 Gewichtsteile (B-6). Besonders bevorzugt enthält die Mischung der Komponenten (A):(B-4):(B-6) 3 bis 5 Gewichtsteile (A), 3 bis 5 Gewichtsteile (B-4) und 3 bis 5 Gewichtsteile (B-6).

Die zuvor beschriebene erfindungsgemäße Mischung (10) kann sowohl zur Behandlung von Blättern und Stängeln, als auch zur Saatgutbehandlung der Gerstenpflanzen eingesetzt werden. Vorzugsweise wird die zuvor beschriebene Mischung (10) zur Behandlung von Blättern und Stängeln eingesetzt. Die dazu üblicherweise eingesetzten Aufwandmengen betragen 3 g bis 1000 g, vorzugsweise 50 g bis 500 g, besonders bevorzugt zwischen 100 g bis 350 g der Mischung (10) bezogen auf 1 ha der zu behandelnden Pflanzen.

Die Wirkstoffe können als solche, in Form ihrer Formulierungen oder den daraus bereiteten Anwendungsformen, wie gebrauchsfertige Lösungen, Suspensionen, Spritzpulver, Pasten, lösliche Pulver, Stäubemittel und Granulate angewendet werden. Die Anwendung geschieht in üblicher Weise, z.B. durch Gießen, Verspritzen, Versprühen, Verstreuen, Verstäuben, Verschäumen, Bestreichen usw. Es ist ferner möglich, die Wirkstoffe nach dem Ultra-Low-Volume-Verfahren auszubringen oder die Wirkstoffzubereitung oder den Wirkstoff selbst in den Boden zu injizieren. Es kann auch das Saatgut der Pflanzen behandelt werden.

Beim Einsatz von Bixafen als Fungizid können die Aufwandmengen je nach Applikationsart innerhalb eines größeren Bereiches variiert werden. Bei der Behandlung von Pflanzenteilen liegen die Aufwandmengen an Wirkstoff im allgemeinen zwischen 0,1 und 10.000 g/ha, vorzugsweise zwischen 10 und 1.000 g/ha. Bei der Saatgutbehandlung liegen die Aufwandmengen an Wirkstoff im allgemeinen zwischen 0,001 und 50 g pro Kilogramm Saatgut, vorzugsweise zwischen 0,01 und 10 g pro Kilogramm Saatgut. Bei der Behandlung des Bodens liegen die Aufwandmengen an Wirkstoff im allgemeinen zwischen 0,1 und 10.000 g/ha, vorzugsweise zwischen 1 und 5.000 g/ha.

## Patentansprüche

1. Verwendung von Bixafen zur Bekämpfung von *Sclerotlinia sclerotiorum*, *Leptosphaeria maculans (Phoma lingam), Alternaria brassicae, Botrytis cinerea, Erysiphe polygoni* und *Pyrenopeziza brassicaee* auf Raps-Pflanzen.

2. Verwendung von Bixafen zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni und Blumeria graminis* auf Roggen-Pflanzen.

3. Verwendung von Bixafen zur Bekämpfung von *Ramularia areola, Colletotrichum gossypii var*. *cephalosporioides* auf Baumwoll-Pflanzen.

4. Verwendung von Bixafen zur Bekämpfung von *Septoria tritici, Stagonospora nodorum, Oculimacula spp., Puccinia recondita, Puccinia striiformis, Puccinia hordei, Drechslera teres, Drechslera tritici-repentis, Ramularia collo-cygni, Blumeria graminis, Microdochium spp., Fusarium spp., Tilletia spp., Rhynchosporium secalis, Pyrenophora spp*.*, Rhynchosporium spp*. und *Ustilago spp*. auf Triticale-, Gerste- und Weizen-Pflanzen.

5. Verwendung von Bixafen zur Bekämpfung von *Sclerotinia spp*.*,Puccinia arachidis, Mycosphaerella spp*. und *Sclerotium spp*. auf Erdnuss- und Bananen-Pflanzen.

6. Verwendung von Bixafen zur Bekämpfung von *Botrytis fabae, Uromyces viciae-fabae, Ascochyta fabae, Scleorotinia spp*.*, Phaeisariopsis spp* auf Bohnen-Pflanzen.

7. Verwendung von Bixafen zur Bekämpfung von *Cercospora spp*.*, Fusarium spp*.*, Puccinia spp*.*, Helminthosporium spp. und Puccinia spp*. auf Mais-Pflanzen.

8. Verwendung von Bixafen zur Bekämpfung von *Rhizoctonia spp*.*; Cercospora spp*.*, Erysiphe spp*.*, Ramularia spp*. und *Uromyces spp*. auf Rüben-Pflanzen.

9. Verfahren zum Bekämpfen von Krankheiten von auf Weizen-, Gerste-, Roggen- und Triticale- Raps-, Bananen-, Erdnuss-, Mais-, Erbsen-, Bohnen- und Zuckerrüben-Pflanzen, **dadurch gekennzeichnet, dass** man die jeweiligen Pflanzen mit Bixafen behandelt.

10. Verfahren gemäß Anspruch 9, wobei die behandelten Pflanzen transgene Pflanzen sind.
